# DEMANDE DE BREVET EUROPEEN

(11) **EP 1 367 468 A1**
(43) Date de publication de la demande: **03.12.2003**
(21) Numéro de dépôt: 03291122.4
(22) Date de dépôt: 14.05.2003
(51) Int. Cl.: G05B 19/10, B25J 9/16

(54) **Dispositif et produit-programme de commande, notamment de manipulateurs ou de robots**

(30) Priorité: 31.05.2002 FR 0206712
(71) Demandeur: SEPRO ROBOTIQUE, 85000 La Roche-Sur-Yon (FR)
(72) Inventeur: Lanquetin, Gilles, 85430 Aubigny (FR)
(74) Mandataire: Kaspar, Jean-Georges

(57) **Abrégé**

Dispositif et produit-programme de commande, notamment de manipulateurs ou de robots.

Un dispositif de commande comporte un moyen d'interaction avec un opérateur et des moyens de mémorisation. Ce dispositif comporte des moyens successifs de détermination d'application, agencés pour présenter à l'opérateur des choix successivement compatibles.

Le dispositif intègre de préférence un produit-programme de commande comportant des moyens logiciels 7 successifs de détermination d'application, destinés à présenter à l'opérateur des choix successivement compatibles.

## Description

L'invention est relative à un dispositif de commande, comportant un moyen d'interaction avec un opérateur et des moyens de mémorisation de cycles de commande.

L'invention est également relative à un produit-programme de commande comportant un système d'interaction avec un opérateur et un sous-programme de mémorisation de cycles de commande.

L'invention est particulièrement utile dans son application à la commande de manipulateurs ou de robots, notamment de manipulateurs ou de robots utilisés pour le démoulage de pièces.

Les robots ou manipulateurs industriels utilisés pour le déchargement de presses d'injection doivent être commandés pour permettre une opération efficace des presses d'injection. Ces robots ou manipulateurs industriels sont utilisés pour démouler des pièces injectées en saisissant les pièces et en les déplaçant selon des cycles prédéterminés choisis en fonction des presses d'injection servies par ces robots ou manipulateurs industriels.

Ces cycles peuvent comporter des mouvements de direction parallèle ou perpendiculaire à l'axe d'injection, de manière à permettre l'approche d'un outil de manutention de la moulée, la saisie de ladite moulée, et son extraction du moule. Alternativement, dans le cas de pièces présentant une "carotte" d'injection, ces cycles peuvent comporter l'approche d'un outil de manutention de la "carotte" d'injection, la saisie de ladite "carotte", et son extraction du moule.

A cet effet, il est nécessaire de synchroniser les mouvements des robots manipulateurs industriels avec les mouvements des parties mobiles du moule ou de ses accessoires aptes à éjecter les pièces moulées des cavités du moule : dans le cas de pièces sans "carotte" d'injection, l'éjection de la moulée est effectuée par des éjecteurs ou des noyaux d'injection ; tandis que, dans le cas de pièces présentant une "carotte" d'injection, l'écartement des parties mobiles du moule permet la saisie de la "carotte" d'injection.

Après avoir saisi une ou plusieurs pièces moulées, présentant ou non une "carotte" d'injection, les manipulateurs ou robots industriels doivent effectuer un ensemble de mouvements pour orienter l'outil de manutention de manière à éviter les obstacles au cours des mouvements successifs du robot ou manipulateur et de l'outil de manutention portant les pièces injectées jusqu'à la dépose finale.

De manière conventionnelle, les robots ou manipulateurs industriels présentent des axes de déplacement en translation et en rotation indépendants des axes d'orientation en translation et en rotation des outils de manutention des pièces injectées portées par lesdits robots ou manipulateur industriels.

Le nombre important et la complexité des mouvements de translation et de rotation nécessitent une commande automatique et séquentielle du robot ou manipulateur industriel, à l'aide d'un système dont la partie déterminante est un dispositif de commande comportant un moyen d'interaction avec un opérateur et des moyens de mémorisation de cycles de commande, ce dispositif étant habituellement désigné sous l'appellation "Interface Homme Machine" par les hommes du métier.

Un premier type de dispositif connu permet l'introduction manuelle de données dans la mémoire sous forme d'instructions d'un langage de programmation de type effecteur, présentant l'avantage d'une grande flexibilité mais nécessitant une formation approfondie et coûteuse des opérateurs.

Un deuxième type de dispositif de commande connu permet l'apprentissage de cycles de commande en simulant ou en commandant les mouvements du robot. Cette méthode de simulation ou d'apprentissage du robot ou manipulateur industriel est intuitive, mais permet difficilement les modifications, et ne permet pas un cadencement précis et une synchronisation des mouvements du robot et du moule de la presse d'injection, en entraînant ainsi une incertitude sur les coordonnées temporelles des déplacements du robot ou manipulateur et du moule et sur leur synchronisation.

Un troisième type de dispositif de commande de type connu permet l'introduction manuelle de données par des choix dans des listes, en visualisant les effets des choix effectués par l'opérateur à l'aide d'illustrations graphiques des actions correspondantes. Cette méthode conviviale de choix dans des listes ne permet pas à l'utilisateur une perception synthétique des interactions entraînées par les choix effectués et rend difficile et complexe l'introduction de modifications postérieures.

Dans les trois types de dispositif connus, la détermination de l'enchaînement des mouvements pourra ensuite être affinée par une définition précise des coordonnées de certaines positions remarquables. Les coordonnées des positions de fin de mouvement peuvent être introduites manuellement directement lors de l'introduction des instructions du cycle de commande, en nécessitant alors une connaissance approfondie de la structure du programme et du langage de programmation correspondant.

Les coordonnées des positions de fin de mouvement peuvent également être introduites par apprentissage des positions finales de chacun des mouvements ou des positions de certains points remarquables intervenant dans le cycle de commande, en présentant toutefois un risque d'erreur important résultant de l'absence d'un retour d'informations vers l'opérateur qui lui permettent d'avoir une vision synthétique du résultat obtenu.

Un but de l'invention est de simplifier la commande des robots ou manipulateurs industriels, notamment des robots ou manipulateurs industriels de démoulage de pièces, en évitant des risques d'erreur ou les incertitudes de choix pour l'opérateur.

Un deuxième but de l'invention est de fournir un nouveau dispositif de commande permettant de créer et modifier des programmes de tâches en visualisant l'effet de ces choix de façon synthétique et interactive.

Un troisième but de l'invention est de fournir un produit-programme de commande permettant une interaction simple et efficace avec l'opérateur, en supprimant les risques d'erreur et en évitant l'utilisation d'un langage de programmation complexe et nécessitant une formation approfondie.

Un quatrième but de l'invention est de permettre la commande de robots ou de manipulateurs industriels, notamment de robots et manipulateurs industriels de démoulage de pièces, de manière ergonomique et sûre, en évitant tout risque d'accident de matériel ou de personnel.

L'invention a pour objet un dispositif de commande, comportant un moyen d'interaction avec un opérateur et des moyens de mémorisation de cycles de commande, caractérisé en ce que le dispositif comporte des moyens successifs de détermination d'application, agencés pour présenter à l'opérateur des choix successivement compatibles.

Selon d'autres caractéristiques de l'invention :
- le moyen d'interaction avec l'opérateur est constitué par un écran tactile à reconfiguration automatique en fonction des choix effectués par l'opérateur,
- les moyens de mémorisation de cycles de commande comportent des moyens de mémorisation permanente aptes à sauvegarder un programme de commande établi par choix successifs de l'opérateur,
- les moyens successifs de détermination d'application comportent des moyens de détermination de déplacements géométriques,
- les moyens de détermination de déplacements géométriques comportent des moyens de détermination de limites ou butées, de déplacement et des moyens de détermination de positions géométriques de paramétrage des déplacements.

L'invention a également pour objet un produit-programme de commande, comportant un système d'interaction avec un opérateur et un sous-programme de mémorisation de cycles de commande. le produit-programme de commande comporte des moyens logiciels successifs de détermination d'application, destinés à présenter à l'opérateur des choix successivement compatibles.

Selon d'autres caractéristiques de l'invention :
- le système d'interaction avec un opérateur comporte un système de gestion d'écran tactile, apte à reconfigurer automatiquement la présentation de l'écran tactile lorsque l'opérateur effectue un choix par pression sur une zone de l'écran tactile,
- les moyens logiciels successifs de détermination d'application comportent des moyens logiciels d'acquisition de positions géométriques,
- le sous-programme de mémorisation de cycles de commande comporte des moyens logiciels de mémorisation pour sauvegarder un programme de commande établi par choix successifs de l'opérateur.

L'invention enfin pour objet un manipulateur ou robot industriel, notamment destiné au démoulage de pièces injectées sur presse, commandé par un dispositif selon l'invention, ou commandé par un dispositif exécutant un produit-programme selon l'invention.

L'invention sera mieux comprise grâce à la description qui va suivre donnée à titre d'exemple non limitatif en référence aux dessins annexés dans lesquels :
- La figure 1, représente schématiquement une vue en perspective d'un dispositif de commande selon l'invention.
- La figure 2, représente schématiquement un organigramme fonctionnel d'enchaînement d'étapes dans le cas d'un déchargement simple de pièces.
- Les figures 3 à 15, représentent schématiquement des présentations d'écrans relatives aux étapes de l'organigramme de fonctionnement de la figure 2.
- La figure 16, représente schématiquement un schéma fonctionnel d'un dispositif de commande selon l'invention.

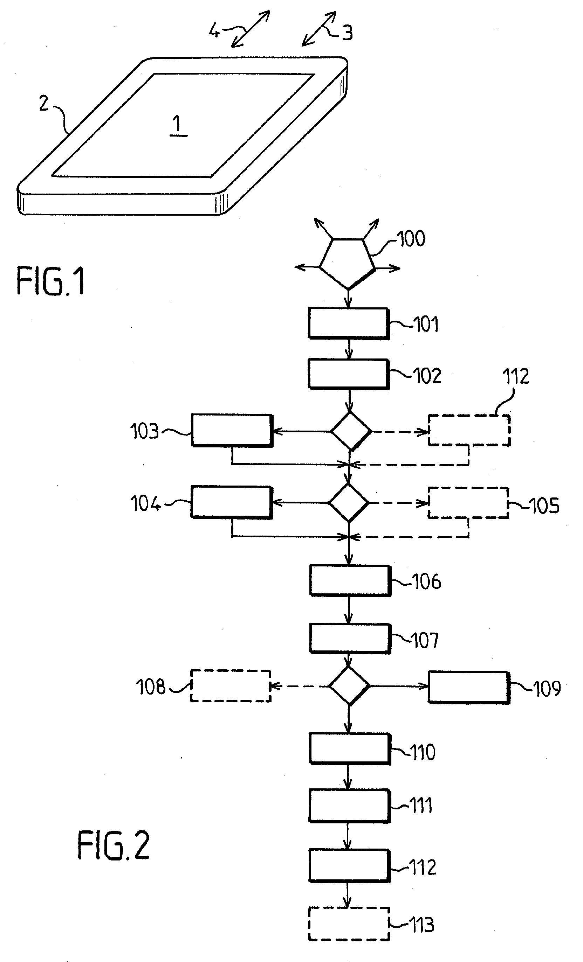

En référence à la figure 1, un dispositif de commande selon l'invention comporte un écran tactile 1 à reconfiguration automatique présentant à l'opérateur une liste de choix à effectuer. L'écran tactile 1 monté dans son boîtier 2 est en liaison avec un automate programmable ou un moyen analogue de gestion technique par l'intermédiaire d'une liaison filaire ou non filaire symbolisée par la flèche 3. Le dispositif de commande selon l'invention peut également être en liaison avec un ordinateur ou un moyen de gestion de production par l'intermédiaire d'une liaison filaire ou non filaire symbolisée par la flèche 4.

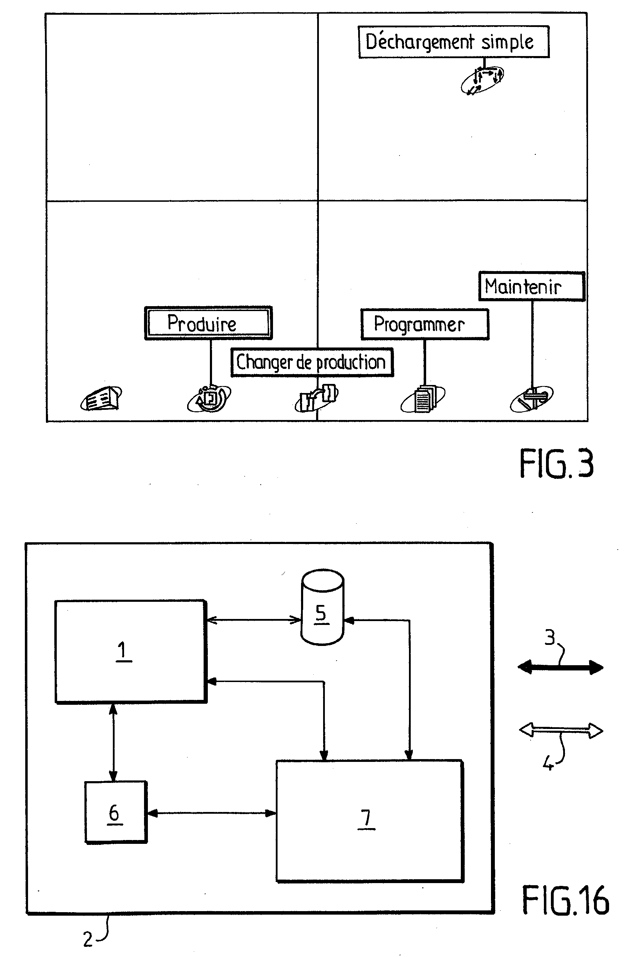

En référence à la figure 2, et aux présentations d'écrans des figures 3 à 15, un organigramme de fonctionnement décrit une programmation interactive d'un dispositif selon l'invention, au regard des présentations d'écran reconfigurées automatiquement, conformément aux figures 3 à 15.

A l'étape 100, présentée à l'opérateur selon la présentation de la figure 3, un choix doit être effectué entre cinq applications : déchargement simple, produire, changer de production, programmer ou maintenir.

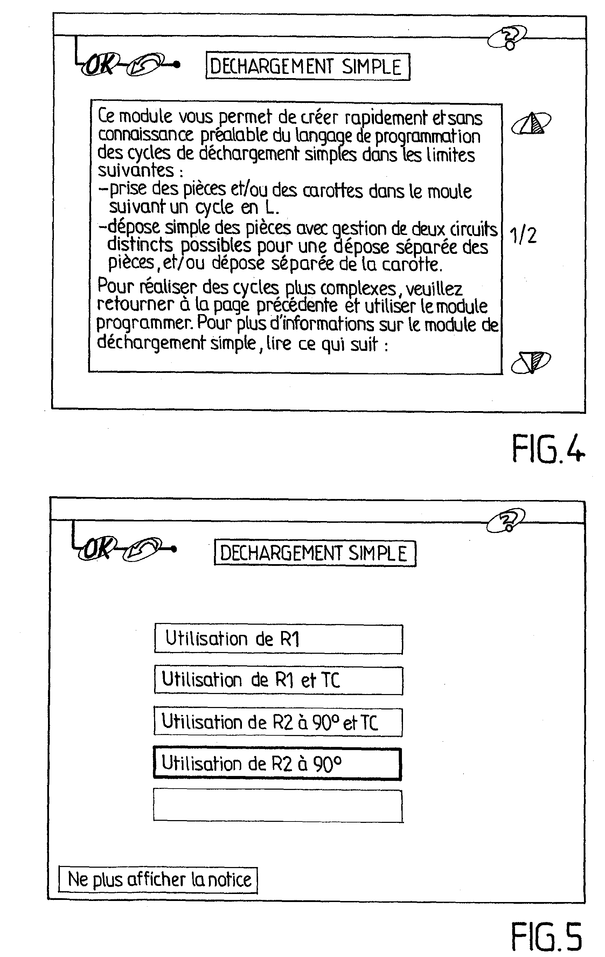

L'appui de l'opérateur sur une touche, par exemple la touche "déchargement simple" produit le passage à la présentation d'écran suivante représentée à la figure 4 et à l'étape 101, qui constitue une étape d'information ou d'avertissement de l'opérateur de l'étendue de l'application choisie : dans l'exemple considéré, de l'application "déchargement simple".

Ce choix valide des variables booléennes, de manière à établir une relation bijective entre la liste des choix possibles restants successivement compatibles et les icônes ou imagettes dont la présentation est autorisée sur l'écran tactile.

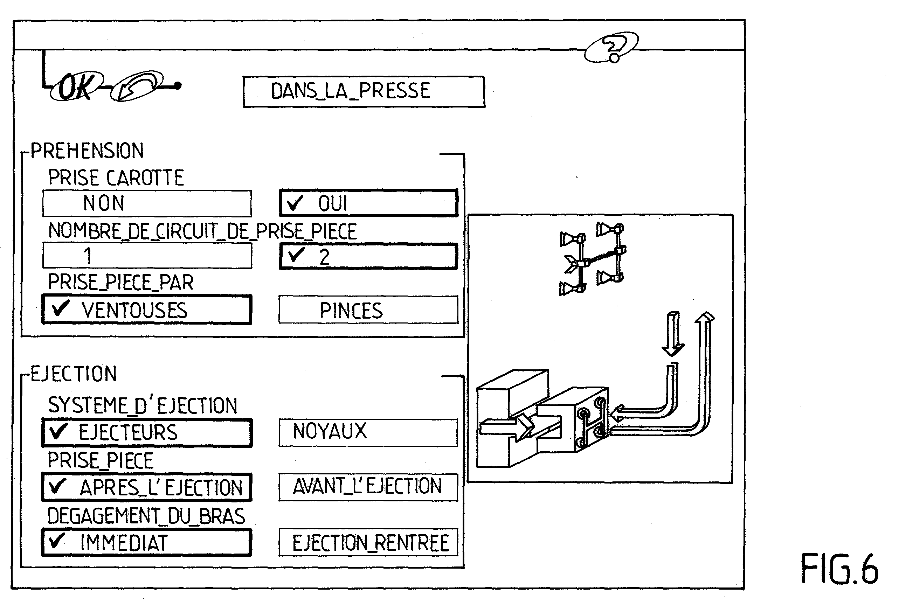

Ayant pris connaissance de l'étendue de l'application "déchargement simple", éventuellement par défilement à l'aide des flèches de défilement, l'opérateur touche la flèche "OK" pour passer à l'étape 102 suivante correspondant à la présentation d'écran de la figure 5. La présentation d'écran de la figure 5 donne à l'opérateur une possibilité de choix parmi plusieurs mouvements prédéfinis R1, TC, R2 à 90°. L'opérateur touche par exemple "utilisation de R2 à 90°" et valide par la flèche "OK" pour passer à l'étape 103 suivante correspondant à la présentation d'écran de la figure 6.

Le choix effectué sur des pages de l'écran tactile 1 par l'opérateur entraîne automatiquement une modification des graphismes relatifs à la préhension et à l'éjection.

Ainsi, le choix d'une prise-carotte sur la figure 6 fait figurer celui-ci sur le graphisme entre les ventouses de prise de pièces.

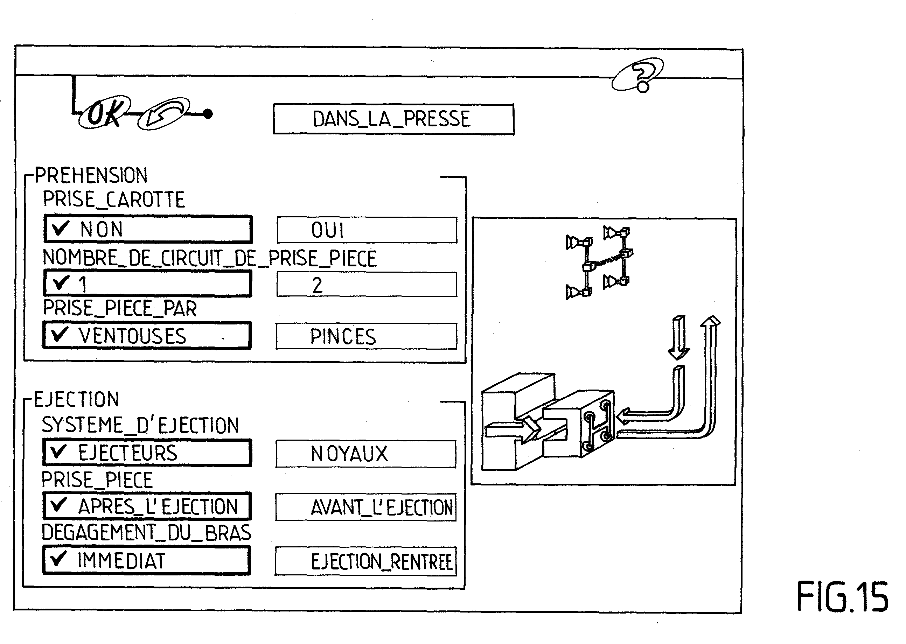

Une autre possibilité de choix représentée à la figure 15 correspondant à l'absence de prise-carotte fait disparaître celui-ci du graphisme de l'organe de préhension.

Ainsi, les graphismes illustrent au fur et à mesure du programme les choix successivement compatibles dont l'exécution reste possible pour le cycle de commande en cours de programmation.

Les informations correspondant à l'éjection sont validées par l'opérateur conformément aux caractéristiques de la presse d'injection servie par le robot ou manipulateur industriel commandé à l'aide du dispositif selon l'invention.

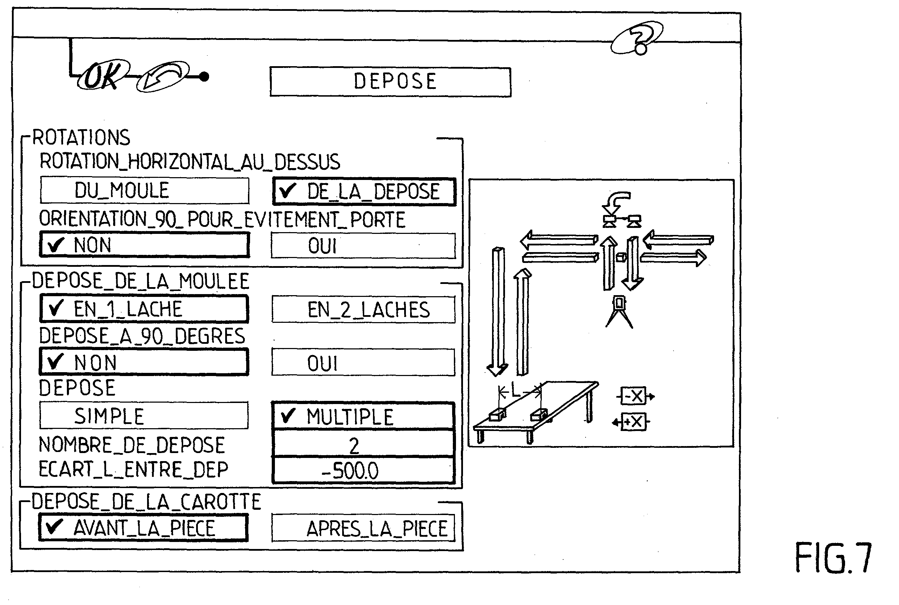

Après avoir effectué les choix de l'étape 103 et validé par la flèche "OK", l'opérateur se voit présenter à l'étape 104 la présentation d'écran suivant de la figure 7 correspondant à la dépose.

L'opérateur se voit présenter plusieurs choix possibles correspondant aux caractéristiques des mouvements de dépose.

L'opérateur peut par exemple effectuer un choix conformément à la figure 7, en particulier en choisissant une dépose multiple avec un écartement entre dépose de 500 mm correspondant au graphisme de la figure 7.

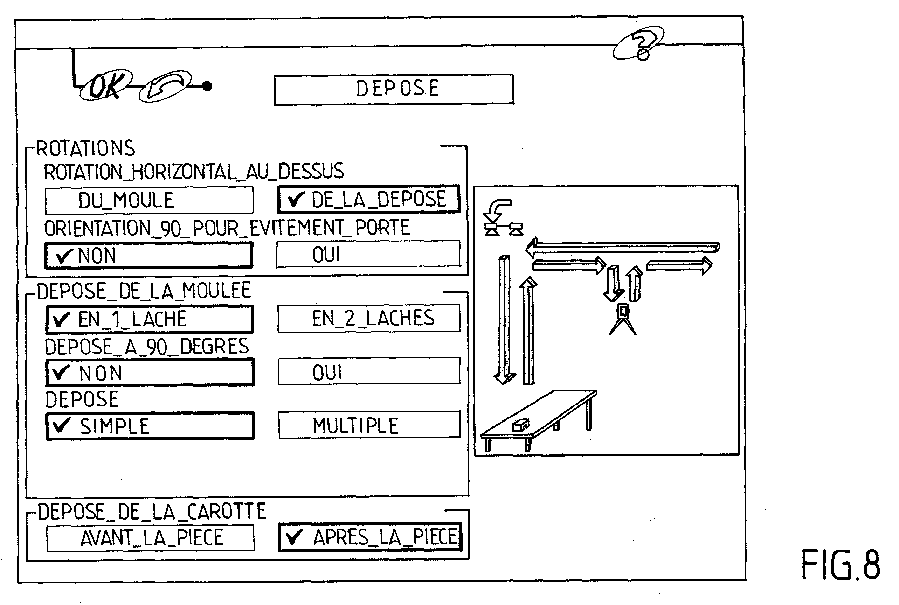

L'opérateur peut également effectuer un choix conforme à la figure 8 correspondant à une dépose simple et au graphisme de la figure 8, dans lequel ni l'écartement L de la figure 7, ni les butées latérales de dépose ne sont représentées.

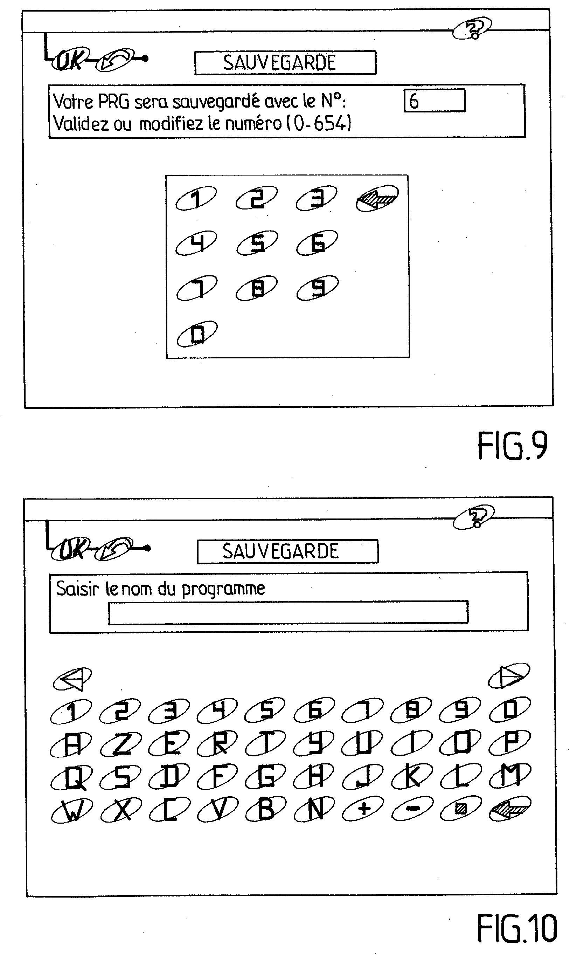

Après avoir acquitté son choix par la flèche "OK", l'opérateur se voit présenter l'étape 106 suivante de sauvegarde correspondant à la présentation d'écran de la figure 9. A cette étape 106, l'opérateur indique un numéro de sauvegarde compris entre 0 et 654, qui sera affecté au programme sauvegardé et valide par la flèche "OK" pour passer à l'étape suivante 107 correspondant à la présentation d'écran de la figure 10, et à la saisie du nom du programme sauvegardé sous le numéro choisi à l'étape 106, pour passer ensuite à l'écran suivant par validation de la flèche "OK".

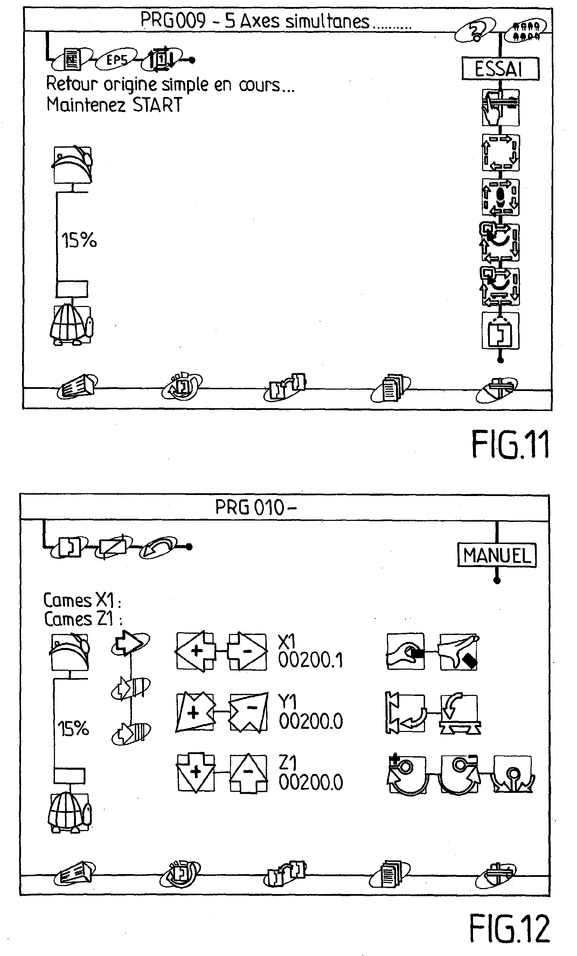

A l'étape 108 suivante, l'opérateur se voit présenter l'écran représenté à la figure 11 dans le cas où son choix effectué après l'étape 102 correspond à la figure 15 et à l'absence de prise-carotte, ou se voit présenter à l'étape 109 l'écran représenté à la figure 12 dans le cas où son choix effectué après l'étape 102 correspond à la présentation d'écran de la figure 6 et à la présence de prise-carotte.

Les écrans présentés aux figures 11 et 12 sont entièrement distincts au niveau du réglage des positions remarquables du robot. L'écran présenté à la figure 11, relatif à une étape 108 en l'absence de prise-carotte, correspond à l'apprentissage automatique des positions de fin de mouvement en mettant à la disposition de l'opérateur des commandes permettant le réglage des butées de fin de course des actionneurs pneumatiques.

La présentation d'écran de la figure 12 correspondant à une étape 109 en présence de prise-carotte, conformément au choix de la figure 6 à l'étape 103, correspond à un apprentissage manuel des positions remarquables du robot et à un réglage correspondant des butées de fin de course.

Lors de l'apprentissage automatique ou manuel des butées de fin de course, l'opérateur est autorisé à déplacer uniquement les axes concernés par le réglage et l'apprentissage en cours.

Pour faciliter la tâche de l'opérateur, la position correspondant à un choix logiquement correct est affichée directement par le dispositif de commande, de manière à faciliter l'apprentissage des positions de fin de course par le robot ou manipulateur industriel.

Compte tenu du fait que les choix présentés à l'opérateur sont successivement compatibles en tenant compte des choix effectués précédemment, aucune impossibilité de fonctionnement n'est présentée à l'opérateur, ce qui évite tout risque d'accidents matériels du robot ou manipulateur industriel.

Le fait d'autoriser l'opérateur à déplacer uniquement les axes de commande correspondant au réglage de l'apprentissage en cours évite également les risques de déplacement intempestif du robot ou manipulateur industriel et les risques d'accidents de personnel correspondants.

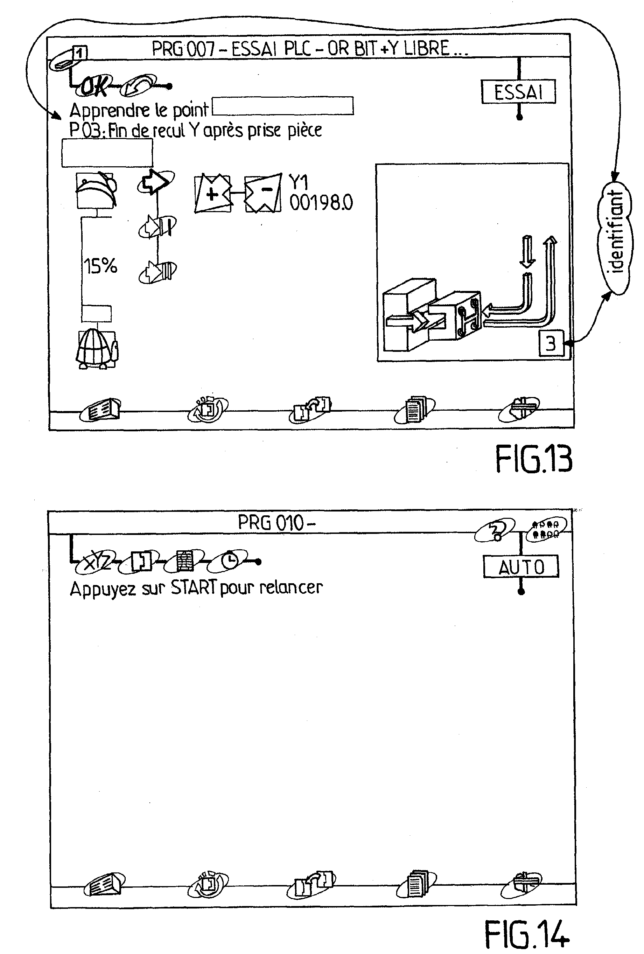

Après avoir mémorisé les positions remarquables du robot à l'étape 108 ou à l'étape 109, conformément aux présentations d'écrans de la figure 11 ou de la figure 12, l'opérateur valide les positions remarquables réglées en mode manuel ou automatique et passe à l'étape 110 conformément à la présentation d'écran de la figure 13, pour identifier et déterminer les coordonnées des points remarquables intermédiaires correspondant à des changements de direction ou des arrêts de mouvements intermédiaires avant un autre déplacement.

L'identification et l'enregistrement des coordonnées des points remarquables intermédiaires à l'étape 110 conformément à la présentation d'écran de la figure 13 s'effectue de préférence en mode guidé ou automatique, étant donné que les pièces extraites du moule sont à cet instant solidarisées à l'organe de manutention du robot ou manipulateur industriel.

Lorsque tous les points remarquables de fin de course des étapes 108 ou 109 et tous les points remarquables intermédiaires de l'étape 110 sont appris et mémorisés par le dispositif selon l'invention, l'opérateur passe à l'étape 111 correspondant à la présentation d'écran de la figure 14.

La présentation de l'écran de la figure 14 indique que le cycle de commande a été entièrement déterminé grâce à l'interaction de l'opérateur avec le dispositif, et permet le lancement du cycle en mode automatique en appuyant sur la touche "START".

Le lancement de la production en agissant sur la touche "START" correspond à une étape 113 de production dont la présentation d'écran n'est pas représentée, mais fait partie de l'application "produire", laquelle peut également être choisie directement à l'étape 100.

En référence à la figure 16, un schéma fonctionnel d'un dispositif selon l'invention comporte un écran graphique 1 avec un moyen d'entrée-sortie approprié pour dialoguer avec une mémoire de masse 5 et une mémoire vive 6.

La mémoire vive 6 interagissant avec l'écran tactile 1 appelle périodiquement un sous-programme 7 de compatibilité et d'agencement de choix successivement compatibles.

Le sous-programme 7 construit des tables successivement remises à jour de variables booléennes pour autoriser ou non l'affichage de graphismes associés sur l'écran tactile 1.

L'invention décrite en référence à un mode de réalisation particulier n'y est nullement limitée, mais couvre au contraire toute modification de forme et toute variante de réalisation dans le cadre et l'esprit de l'invention.

L'invention couvre en particulier toute réalisation matérielle du dispositif, même en l'absence d'écran graphique, l'essentiel étant que le dispositif comporte un moyen d'interaction avec un opérateur et des moyens de mémorisation de cycles de commande, agencés pour comporter des moyens successifs de détermination d'application présentant à l'opérateur des choix successivement compatibles.

## Revendications

1. Dispositif de commande, comportant un moyen d'interaction avec un opérateur et des moyens de mémorisation de cycles de commande, **caractérisé en ce que** le dispositif comporte des moyens successifs de détermination d'application, agencés pour présenter à l'opérateur des choix successivement compatibles.

2. Dispositif selon la revendication 1, **caractérisé en ce que** le moyen d'interaction avec l'opérateur est constitué par un écran tactile à reconfiguration automatique en fonction des choix effectués par l'opérateur.

3. Dispositif selon la revendication 1 ou 2, **caractérisé en ce que** les moyens de mémorisation de cycles de commande comportent des moyens de mémorisation permanente aptes à sauvegarder un programme de commande établi par choix successifs de l'opérateur.

4. Dispositif selon l'une quelconque des revendications précédentes, **caractérisé en ce que** les moyens successifs de détermination d'application comportent des moyens de détermination de déplacements géométriques.

5. Dispositif selon la revendication 4, **caractérisé en ce que** les moyens de détermination de déplacements géométriques comportent des moyens de détermination de limites ou butées, de déplacement et des moyens de détermination de positions géométriques de paramétrage des déplacements.

6. Produit-programme de commande, comportant un système d'interaction avec un opérateur et un sous-programme de mémorisation de cycles de commande, **caractérisé en ce que** le produit-programme de commande comporte des moyens logiciels successifs de détermination d'application, destinés à présenter à l'opérateur des choix successivement compatibles.

7. Produit-programme de commande selon la revendication 6, **caractérisé en ce que** le système d'interaction avec un opérateur comporte un système de gestion d'écran tactile, apte à reconfigurer automatiquement la présentation de l'écran tactile lorsque l'opérateur effectue un choix par pression sur une zone de l'écran tactile.

8. Produit-programme de commande selon la revendication 6, **caractérisé en ce que** les moyens logiciels successifs de détermination d'application comportent des moyens logiciels d'acquisition de positions géométriques.

9. Produit-programme de commande selon l'une quelconque des revendications 6 à 8, **caractérisé en ce que** le sous-programme de mémorisation de cycles de commande comporte des moyens logiciels de mémorisation pour sauvegarder un programme de commande établi par choix successifs de l'opérateur.

10. Manipulateur ou robot, notamment pour le démoulage de pièces, commandé par un dispositif selon l'une quelconque des revendications 1 à 5.

11. Manipulateur ou robot, notamment pour le démoulage de pièces, commandé par un dispositif exécutant un produit-programme selon l'une quelconque des revendications 6 à 9.
